# EUROPEAN PATENT SPECIFICATION

(11) **EP 1 094 633 B1**
(45) Date of publication and mention of the grant of the patent: **27.08.2003**
(21) Application number: 99203414.0
(22) Date of filing: 18.10.1999
(51) Int. Cl.: H04L 9/08

(54) **Method for distributing keys among a number of secure devices, method for communicating with a number of secure devices, security system, and set of secure devices**
Verfahren zur Verteilung von Schlüsseln an eine Anzahl gesicherter Geräten, Verfahren zur Kommunikation zwischen einer Anzahl gesicherter Geräten, Sicherheitssystem, und Satz gesicherter Geräten
Procédé de distribution de clés pour un nombre d'appareils sécurisés, procédé pour communiquer avec un nombre d'appareils sécurisés, système de sécurité, et ensemble d'appareils sécurisés

(43) Date of publication of application: 25.04.2001
(73) Proprietor: Irdeto Access B.V., 2132 HD Hoofddorp (NL)
(72) Inventor: Wajs, Andrew Augustine, 2023 AA Harlem (NL)
(74) Representative: de Vries, Johannes Hendrik Fokke

(56) References cited:
- EP-A- 0 641 103
- BLUNDO C ET AL: "Trade-offs between communication and storage in unconditionally secure schemes for broadcast encryption and interactive key distribution" ADVANCES IN CRYPTOLOGY - CRYPTO'96. 16TH ANNUAL INTERNATIONAL CRYPTOLOGY CONFERENCE. PROCEEDINGS, ADVANCES IN CRYPTOLOGY - CRYPTO '96, SANTA BARBARA, CA, USA, 18-22 AUG. 1996, pages 387-400, XP000626596 1996, Berlin, Germany, Springer-Verlag, Germany ISBN: 3-540-61512-1
- NAKAMURA H ET AL: "Hierarchical group oriented key management method HGK" PROCEEDINGS OF THE SIXTH ANNUAL COMPUTER SECURITY APPLICATIONS CONFERENCE (CAT. NO.90TH0351-7), TUCSON, AZ, USA, 3-7 DEC. 1990, pages 44-49, XP002130707 1990, Los Alamitos, CA, USA, IEEE Comput. Soc. Press, USA ISBN: 0-8186-2105-2
- SHIUH-JENG WANG ET AL: "A hierarchical and dynamic group-oriented cryptographic scheme" IEICE TRANSACTIONS ON FUNDAMENTALS OF ELECTRONICS, COMMUNICATIONS AND COMPUTER SCIENCES, JAN. 1996, INST. ELECTRON. INF. & COMMUN. ENG, JAPAN, vol. E79-A, no. 1, pages 76-85, XP000558722 ISSN: 0916-8508

## Description

The invention relates to a method for distributing keys among a number of secure devices. The invention further relates to a method for communicating with a number of secure devices, to a security system in which this method is used, and to a set of secure devices obtained by the distributing method.

It is known to protect content against unauthorised copying by using conditional access like technology. The term content in the present application is used as an indication of any type of information, such as audio or video signals, computer software etc. To protect the content, the content is scrambled using a control word. The term "control word" refers to the key which is used in the scrambling algorithm to scramble the content. The control word is generally transferred to the descrambling location in an encrypted message. In a consumer electronic system, such as for example a CD or DVD player or a PC, a secure device, such as a smart card, is used to decrypt the encrypted message to obtain the control word and the decrypted control word is used by the electronic system to descramble the content. As a large number of secure devices is open to attack by hackers, it is not unlikely on the long term that the security of a secure device will be breached so that the content is available for unauthorized commercial purposes. In a commonly used method in conditional access systems, breaches of security are managed by distributing new keys which are used to encrypt the control word. However in particular in off-line circumstances, i.e. in case of distribution of scrambled content on CD's and DVD's, for example, such a distribution method can not be used.

Blundo, C. et al., 'Trade-offs between communication and storage in unconditionally secure schemes for broadcast encryption and interactive key distribution', *Advances in Cryptology - Crypto '96. 16*^{*th*} *annual international cryptology conference. Proceedings, advances in cryptology - crypto '96 Santa Barbara,* CA, USA, 18-22 Aug. 1996, page 389, discloses a key predistribution scheme. A trusted authority generates and distributes secret information to each user. Once the secret information is distributed, each user in a privileged set P should be able to compute the key associated with P. On the other hand, no forbidden set disjoint from P should be able to compute any information about the key. Thus, if the secret information of one user in the set is discovered, the key associated with P is known.

The invention aims to provide a method for distributing keys among a number of secure devices, which is in particular suitable for distributing keys in stored media applications.

It is a further object of the invention to provide a method for communicating with a number of secure devices.

The invention further aims to provide a method for scrambling a content and a method for descrambling a scrambled content, in particular for use with stored media applications.

Moreover, it is an object of the invention to provide a security system, in which these methods are used.

Finally the invention aims to provide a set of secure devices obtained by the method for distributing keys.

According to the invention a method for distributing keys among a number of secure devices is provided, wherein the secure devices are divided into sets, each set having a plurality of subsets, each subset comprising two or more secure devices having the same key which is unique for this subset, wherein each secure device is a member of a number of sets such that two or more secure devices which are a member of a subset, are not a member of the same subset in another set.

In this manner a method is obtained, wherein the secure devices will be provided with a number of keys, so that in case security of one secure device is breached, the keys stored in this secure device can be cancelled for future use so that this breached secure device is useless, while the other secure devices can use the remaining keys available to these secure devices.

EP-A-0 641 103 discloses a method for key distribution in a selective broadcasting system. The method allows a center to broadcast a secret to any set T of privileged users out of a universe U of size n so that coalitions of k users not in the privileged set cannot learn the secret. For every set B ⊂ U, 0≤|U|≤ k, a key K_{B} is given to every user x ∈U-B. The common key to the privileged set T is the exclusive or of all keys K_{B}, B ⊂ U-T.

According to the invention the method for communicating with a number of secure devices, comprising providing a number of unique keys, said number of keys being divided into subsets (A,a;A,b;...E,d;E,e), providing a plurality of encrypted messages by encrypting at least one clear message using different keys of said number of keys, adding an identifier to each encrypted message identifying the key used, wherein only a plurality of the available number of keys are used to provide said encrypted messages, forwarding the encrypted messages to the secure devices, and decrypting the encrypted message in the secure device to obtain the clear message.

For scrambling a content for distribution among a number of users, the method of the invention comprises scrambling the content using a control word, wherein the control word is said clear message, wherein the scrambled content and the number of encrypted control messages are forwarded to all users.

The method for descrambling a scrambled content of the invention, comprises receiving the scrambled content and receiving a plurality of encrypted control messages, each encrypted control message having an identifier and containing a control word encrypted using a different key identified by the corresponding identifier, retrieving a first key identifier from a secure device having a plurality of keys with key identifiers, searching for an encrypted control message having an identifier corresponding to the retrieved identifier and decrypting in the secure device the encrypted control message found to obtain the control word, and descrambling the scrambled content by using the control word.

A security system of the invention comprises a plurality of terminals and a plurality of secure devices, each secure device comprising a processor and a memory for storing keys, wherein the secure devices are divided into sets (A,B,C,D,E), each set having a plurality of subsets (a,b,c,d,e), each subset being assigned a unique key from a number of unique keys (A,a;A,b;...E,d;E,e) and each subset comprising two or more of the secure devices, wherein the memory of each secure device contains a plurality of keys unique to different subsets such that the memory of each secure device contains a unique combination of unique subset keys, each terminal comprising means for forwarding an encrypted message to a secure device communicating with the terminal, wherein each encrypted message is obtained by encrypting at least one clear message using different keys of said number of keys, adding an identifier to each encrypted message identifying the key used, wherein only a plurality of the available number of keys are used to provide said encrypted messages, and decrypting the encrypted message in the secure device to obtain the clear message for further use.

Finally, the invention provides a set of secure devices, such as smart cards, each secure device comprising a processor and a memory for storing keys, wherein the secure devices are divided into sets, each set having a plurality of subsets, each subset being assigned a unique key and each subset comprising two or more of the secure devices, wherein the memory of each secure device contains a plurality of keys unique to different subsets such that the memory of each secure device contains a unique combination of unique subset keys.

The invention will be further explained by reference to the drawing.

Fig. 1 schematically shows a content provider and a number of users of the content.

Fig. 2 shows a system for descrambling a scrambled content with a secure device.

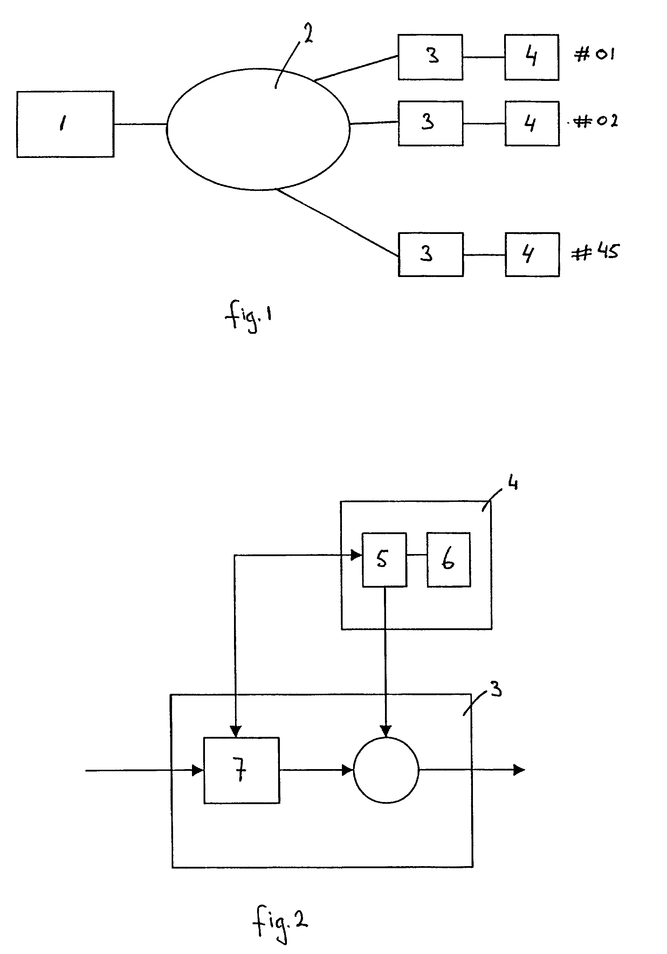

Fig. 1 shows a content provider system 1 operating according to an embodiment of the method for scrambling a content according to the invention. The scrambled content is distributed among a number of users by means of a distribution network 2. This distribution network 2 can be, for example, the Internet, a broadcast network or a number of shops selling CD's, DVD's or other storage media. Each user has a system 3 for descrambling the scrambled content cooperating with a secure device 4, such as a smart card. The system 3 can be part of a CD or DVD player, a PC or can be implemented by means of a suitable software program running on a microprocessor which is part of such equipment.

In order to prevent unauthorized copying of the content provided by the system 1, a provider will scramble the content using a suitable scrambling algorithm, wherein a key is used to scramble this content. The key used to scramble the content will be indicated as control word in this description. The control word is delivered to the users as an encrypted control message or cryptogram. It is noted that this control message may contain further entitlement information such as number of uses of the content, period during which the content may be used or the like. This part of the control message is not part of the present invention and will not be described further. The control message is encrypted using a key which is unique to the secure device 4 of a restricted number of users only. The manner in which the keys are distributed among a number of secure devices 4 will explained by reference to the following example.

| A | | | | |
|---|---|---|---|---|
| a | b | c | d | e |
| 01 | 11 | 21 | 31 | 41 |
| 02 | 12 | 22 | 32 | 42 |
| 03 | 13 | 23 | 33 | 43 |
| 04 | 14 | 24 | 34 | 44 |
| 05 | 15 | 25 | 35 | 45 |
| | | | | |

| B | | | | |
|---|---|---|---|---|
| a | b | c | d | e |
| 01 | 11 | 21 | 31 | 41 |
| 42 | 02 | 12 | 22 | 32 |
| 33 | 43 | 03 | 13 | 23 |
| 24 | 34 | 44 | 04 | 14 |
| 15 | 25 | 35 | 45 | 05 |
| | | | | |

| C | | | | |
|---|---|---|---|---|
| a | b | c | d | e |
| 01 | 11 | 21 | 31 | 41 |
| 32 | 42 | 02 | 12 | 22 |
| 13 | 23 | 33 | 43 | 03 |
| 44 | 04 | 14 | 24 | 34 |
| 25 | 35 | 45 | 05 | 15 |
| | | | | |

| D | | | | |
|---|---|---|---|---|
| a | b | c | d | e |
| 01 | 11 | 21 | 31 | 41 |
| 22 | 32 | 42 | 02 | 12 |
| 43 | 03 | 13 | 23 | 33 |
| 14 | 24 | 34 | 44 | 04 |
| 35 | 45 | 05 | 15 | 25 |

| E | | | | |
|---|---|---|---|---|
| a | b | c | d | e |
| 01 | 11 | 21 | 31 | 41 |
| 12 | 22 | 32 | 42 | 02 |
| 23 | 33 | 43 | 03 | 13 |
| 34 | 44 | 04 | 14 | 24 |
| 45 | 05 | 15 | 25 | 35 |

As indicated in these tables, the secure devices are divided into sets A,B,C,D and E and each set has a plurality of subsets a,b,c,d and e. Subset A,a comprises secure devices #01-#05, subset A,b comprises secure devices #11-#15, subset A,c comprises secure devices #21-#25, subset A,d comprises secure devices #31-#35 and subset A,e comprises secure devices #41-#45. The secure devices of each subset receive the same unique key, for example the secure devices #01-#05 of subset A,a receive the unique key A,a. This means that for example secure device #01 has the following set of unique keys A,a; B,a; C,a; D,a and E,a. As shown in the above tables, each secure device is a member of a number of sets A-E such that any two or more secure devices which are a member of a subset, are not a member of the same subset in another set. In this manner each secure device 4 will receive a unique combination of subset keys.

The keys are distributed among the secure devices 4 when the secure devices are initialized. As shown in fig. 2, each secure device 4 comprises a processor 5 and a memory 6, wherein the unique combination of subset keys is stored in the memory 6.

The control word used by the provider system 1 to scramble the content is encrypted in this example using the keys of the first set A, i.e. the keys A,a, A,b ... A,e. This requires five encrypted control messages to be added to the content for distribution together with the content. A header with an identifier identifying the key used to encrypt the control message is added to the control message.

When the scrambled content is received by the system 3, descrambling of the content occurs as follows. When the secure device 4 is connected to the descrambling system 3, the processor 5 of the secure device 4 will forward the identifier of the first of its keys to a processor 7 of the descrambling system 3. The processor 7 receives the scrambled content together with the encrypted control messages and will send the control message with a corresponding identifier to the secure device 4 and the processor 5 will decrypt the encrypted control message using the corresponding key from the memory 6. The decrypted control word will be forwarded to the processor 7 for descrambling the content and in this manner the clear content is obtained.

If we assume that secure device #01 has been breached, the keys of the combination of keys stored in the memory 6 of this secure device should not be used anymore. This means that secure devices #02-#05 need to be provided with encrypted control messages encrypted by using keys B,b, B,c, B,d and B,e, for example. In this manner it is obtained that the information on the keys stored on secure device #01 is useless for the future.

It is noted that in the example given, after breaching three secure devices, there may be legal secure devices, the keys of which would be exposed. These secure devices can still be provided with an encrypted control message by using a key that is unique to the corresponding secure device. In this respect it is noted that each secure device of the complete set of secure devices will generally be provided with a unique key for forwarding messages to each secure device, if necessary. Further it is noted that the number of encrypted control messages increases each time that the system is breached. Of course, the example given is just for illustration purposes. Generally a set of secure devices will include a much larger number of secure devices which are divided into more sets and subsets than in the example described.

Further it is noted that further subdivisions into subsets, sub-subsets etc. can be made. Further, it is possible to divide the secure devices into entirely independent super sets, wherein keys are distributed within a super set according to the method described.

In case wherein there is a regular online connection with the provider system, it is possible that the provider system 1 forwards a revocation message to all systems 3. This revocation message informs the systems 3 of the fact that the keys of a secure device of which the security has been breached, will not be used anymore. By means of this information, the remaining legal secure devices 4 which are a member of the same subset, will use another key of their own unique combination of keys in future and will provide the corresponding identifier to the descrambling system 3. In this manner the descrambling system will forward the correct encrypted control message to its secure device 4.

The invention can be advantageously used in any security system comprising a plurality of terminals and a plurality of secure devices, in particular in off-line applications. In case of terminals verifying a secure device by challenging the secure device to perform a cryptographic operation, for example in a zero knowledge protocol, the system operates as follows. A secret to be used in the zero knowledge protocol is encrypted using a key of the number of keys available in the system. The keys are distributed among the secure devices as described above. The encrypted secret is forwarded to the secure device with an identifier indicating the key to be used. If this key is available to the secure device, the secure device can decrypt the secret and can use this secret in the zero knowledge protocol. If a secure device is breached, the keys available to the breached device will not be used anymore and those legal secure device having the same keys as the breached device can communicate with the terminals by using another key of the keys available to these legal secure devices.

The invention is not restricted to the above described embodiments which can be varied within a number of ways within the scope of the claims.

## Claims

1. Method for distributing keys among a number of secure devices, wherein the secure devices are divided into sets (A,B,C,D,E), each set having a plurality of subsets (a,b,c,d,e), each subset comprising two or more secure devices having the same key which is unique for this subset, wherein each secure device is a member of a number of sets (A,B,C,D,E) such that two or more secure devices which are a member of a subset, are not a member of the same subset in another set.

2. Method for communicating with a number of secure devices, each storing a combination of keys from among a number of keys, distributed among them using a method according to claim 1, comprising providing a plurality of encrypted messages by encrypting at least one clear message using different keys of said number of keys, adding an identifier to each encrypted message identifying the key used, wherein only a plurality of the available number of keys are used to provide said encrypted messages, forwarding the encrypted messages to the secure devices, and decrypting the encrypted message in the secure device to obtain the clear message.

3. Method according to claim 2, used in a zero knowledge protocol, wherein the clear message is used by the secure device at least as part of a secret used in the zero knowledge protocol.

4. Method according to claim 2 used for scrambling a content for distribution among a number of users, comprising scrambling the content using a control word, wherein the control word is said clear message, wherein the scrambled content and the number of encrypted control messages are forwarded to all users.

5. Method according to claim 4, wherein a revocation message is forwarded to all users, said message identifying a plurality of keys which are revoked from said number of keys.

6. Method for descrambling a scrambled content, comprising receiving the scrambled content and receiving a plurality of encrypted control messages, communicated to a secure device using a method according to claim 2, each encrypted control message having an identifier and containing a control word encrypted using a different key identified by the corresponding identifier, retrieving a first key identifier from a secure device having a plurality of keys with key identifiers, searching for an encrypted control message having an identifier corresponding to the retrieved identifier and decrypting in the secure device the encrypted control message found to obtain the control word, and descrambling the scrambled content by using the control word.

7. Method according to claim 6, wherein a next key identifier is retrieved from the secure device if an encrypted control message with the first retrieved key identifier can not be found.

8. Security system, comprising a plurality of terminals and a plurality of secure devices, each secure device comprising a processor and a memory for storing a combination of keys from among a number of unique keys (A,a;A,b;...;E,d;E,e), wherein the secure devices are divided into sets (A,B,C,D,E), each set having a plurality of subsets (a,b,c,d,e), each subset comprising two or more of the secure devices having the same key which is unique for this subset, wherein each secure device is a member of a number of sets (A,B,C,D,E), such that two or more secure devices which are a member of a subset, are not a member of the same subset in another set, each terminal comprising means for forwarding an encrypted message to a secure device communicating with the terminal, wherein each encrypted message is obtained by encrypting at least one clear message using different keys of said number of keys, adding an identifier to each encrypted message identifying the key used, wherein only a plurality of the available number of keys are used to provide said encrypted messages, and decrypting the encrypted message in the secure device to obtain the clear message for further use.

9. System comprising a number of secure devices, such as smart cards, each secure device comprising a processor and a memory for storing a combination of keys from among a number of unique keys (A,a;A,b;...;E,d;E,e), wherein the secure devices are divided into sets (A,B,C,D,E), each set having a plurality of subsets (a,b,c,d,e), each subset comprising two or more of the secure devices, having the same key which is unique for this subset, wherein each secure device is a member of a number of sets (A,B,C,D,E), such that two or more secure devices which are a member of a subset, are not a member of the same subset in another set.

## Patentansprüche

1. Verfahren zum Verteilen von Schlüsseln unter einer Anzahl sicherer Vorrichtungen, wobei die sicheren Vorrichtungen in Gruppen (A, B, C, D, E) unterteilt sind und jede Gruppe eine Vielzahl von Teilgruppen (a, b, c, d, e) aufweist und jede Teilgruppe zwei oder mehr sichere Vorrichtungen umfasst, die den gleichen Schlüssel haben, der ausschließlich für diese Teilgruppe bestimmt ist, wobei jede sichere Vorrichtung ein Mitglied einer Anzahl von Gruppen (A, B, C, D, E) ist, so dass zwei oder mehr sichere Vorrichtungen, die ein Mitglied einer Teilgruppe sind, nicht ein Mitglied der gleichen Teilgruppe in einer anderen Gruppe sind.

2. Verfahren zum Kommunizieren mit einer Anzahl sicherer Vorrichtungen, die jeweils eine Kombination von Schlüsseln aus einer Anzahl von Schlüsseln speichern, die unter ihnen unter Verwendung eines Verfahrens nach Anspruch 1 verteilt wurden, das Bereitstellen einer Vielzahl verschlüsselter Mitteilungen durch Verschlüsseln wenigstens einer unverschlüsselten Mitteilung unter Verwendung verschiedener Schlüssel der Anzahl von Schlüsseln, Hinzufügen einer Kennung zu jeder verschlüsselten Mitteilung, die den verwendeten Schlüssel angibt, wobei lediglich eine Vielzahl der verfügbaren Anzahl von Schlüsseln verwendet werden, um die verschlüsselten Mitteilungen bereitzustellen, Leiten der verschlüsselten Mitteilungen zu den sicheren Vorrichtungen und Entschlüsseln der verschlüsselten Mitteilungen in der sicheren Vorrichtung umfasst, um die unverschlüsselte Mitteilung zu erhalten.

3. Verfahren nach Anspruch 2, das in einem Zero-Knowledge-Protokoll verwendet wird, wobei die unverschlüsselte Mitteilung von der sicheren Vorrichtung wenigstens als Teil eines Geheimnisses verwendet wird, das in dem Zero-Knowledge-Protokoll verwendet wird.

4. Verfahren nach Anspruch 2, das zum Verzerren (scrambling) eines Inhalts zur Verteilung unter einer Anzahl von Benutzem verwendet wird und Verzerren des Inhalts unter Verwendung eines Kontrollworts umfasst, wobei das Kontrollwort die unverschlüsselte Mitteilung ist und der verzerrte Inhalt sowie die Anzahl verschlüsselter Kontrollmitteilungen zu allen Benutzer geleitet werden.

5. Verfahren nach Anspruch 4, wobei eine Zurücknahmemitteilung zu allen Benutzern geleitet wird und die Mitteilung eine Vielzahl von Schlüsseln angibt, die aus der Anzahl von Schlüsseln zurückgenommen werden.

6. Verfahren zum Entzerren eines verzerrten Inhalts, das Empfangen des verzerrten Inhalts und Empfangen einer Vielzahl verschlüsselter Kontrollmitteilungen umfasst, die zu einer sicheren Vorrichtung unter Verwendung eines Verfahrens nach Anspruch 2 übertragen wurden, wobei jede verschlüsselte Kontrollmitteilung eine Kennung aufweist und ein Kontrollwort enthält, das unter Verwendung eines anderen Schlüssels verschlüsselt wurde, der von der entsprechenden Kennung angebeben wird, Wiedergewinnen einer ersten Schlüsselkennung von einer sicheren Vorrichtung mit einer Vielzahl von Schlüsseln mit Schlüsselkennungen, Suchen nach einer verschlüsselten Kontrollmitteilung mit einer Kennung, die der wiedergewonnenen Kennung entspricht und Entschlüsseln der gefundenen verschlüsselten Kontrollmitteilung in der sicheren Vorrichtung, um das Kontrollwort zu erhalten, sowie Entzerren des verzerrten Inhalts unter Verwendung des Kontrollwortes umfasst.

7. Verfahren nach Anspruch 6, wobei eine nächste Schlüsselkennung aus der sicheren Vorrichtung wiedergewonnen wird, wenn eine verschlüsselte Kontrollmitteilung mit der ersten wiedergewonnenen Schlüsselkennung nicht gefunden werden kann.

8. Sicherheitssystem, das eine Vielzahl von Endstellen und eine Vielzahl sicherer Vorrichtungen umfasst, wobei jede sichere Vorrichtung einen Prozessor und einen Speicher zum Speichern einer Kombination von Schlüsseln aus einer Anzahl einzigartiger Schlüssel (A, a; A, b;....E, d; E, e) umfasst, und die sicheren Vorrichtungen in Gruppen (A, B, C, D, E) unterteilt sind, wobei jede Gruppe eine Vielzahl von Teilgruppen (a, b, c, d, e) ausweist und jede Teilgruppe zwei oder mehr der sicheren Vorrichtungen umfasst, die den gleichen Schlüssel haben, der ausschließlich für diese Teilgruppe bestimmt ist, wobei jede sichere Vorrichtung ein Mitglied einer Anzahl von Gruppen (A, B, C, D, E) ist, so dass zwei oder mehr sichere Vorrichtungen, die ein Mitglied einer Teilgruppe sind, nicht ein Mitglied der gleichen Teilgruppe in einer anderen Gruppe sind, jede Endstelle eine Einrichtung zum Leiten einer verschlüsselten Mitteilung zu einer sicheren Vorrichtung umfasst, die mit der Endstelle kommuniziert, jede verschlüsselte Mitteilung gewonnen wird, indem wenigstens eine unverschlüsselte Mitteilung unter Verwendung verschiedener Schlüssel der Anzahl von Schlüsseln verschlüsselt wird, eine Kennung zu jeder verschlüsselten Mitteilung hinzugefügt wird, die den verwendeten Schlüssel angibt, wobei lediglich eine Vielzahl der verfügbaren Anzahl von Schlüsseln verwendet werden, um die verschlüsselten Mitteilungen bereitzustellen, und die verschlüsselte Mitteilung in der sicheren Vorrichtung entschlüsselt wird, um die unverschlüsselte Mitteilung zur weiteren Verwendung zu erhalten.

9. System, das eine Anzahl sicherer Vorrichtungen, wie beispielsweise Smartcards, umfasst, wobei jede sichere Vorrichtung einen Prozessor und einen Speicher zum Speichern einer Kombination von Schlüsseln aus einer Anzahl einzigartiger Schlüssel (A, a; A, b;....E, d; E, e) umfasst und die sicheren Vorrichtungen in Gruppen (A, B, C, D, E) unterteilt sind, wobei jede Gruppe eine Vielzahl von Teilgruppen (a, b, c, d, e) aufweist und jede Teilgruppe zwei oder mehr sichere Vorrichtungen umfasst, die den gleichen Schlüssel haben, der ausschließlich für diese Teilgruppe bestimmt ist, wobei jede sichere Vorrichtung ein Mitglied einer Anzahl von Gruppen (A, B, C, D, E) ist, so dass zwei oder mehr sichere Vorrichtungen, die ein Mitglied einer Teilgruppe sind, nicht ein Mitglied der gleichen Teilgruppe in einer anderen Gruppe sind.

## Revendications

1. Procédé pour distribuer des clés entre un certain nombre de dispositifs sécurisés, dans lequel les dispositifs sécurisés sont divisés en ensembles (A, B, C, D, E), chaque ensemble possédant une pluralité de sous-ensembles (a, b, c, d, e), chaque sous-ensemble comprenant au moins deux dispositifs sécurisés possédant la même clé, qui est unique pour ce sous-ensemble, et dans lequel chaque dispositif sécurisé est un élément d'un certain nombre d'ensembles (A, B, C, D, E) de sorte que deux ou plus de deux dispositifs sécurisés, qui sont un élément d'un sous-ensemble, ne sont pas un élément du même sous-ensemble dans un autre ensemble.

2. Procédé de communication comportant un certain nombre de dispositifs sécurisés, dont chacun mémorise une combinaison de clés parmi un certain nombre de clés, distribués entre eux en utilisant un procédé selon la revendication 1, comprenant la fourniture d'une pluralité de messages cryptés par cryptage d'au moins un message clair en utilisant différentes clés dudit nombre de clés, l'ajout d'un identifiant à chaque message crypté identifiant la clé utilisée, où seule une pluralité du nombre de clés disponibles est utilisée pour fournir lesdits messages cryptés, l'envoi des messages cryptés aux dispositifs sécurisés et le décryptage du message crypté dans le dispositif sécurisé pour obtenir le message clair.

3. Procédé selon la revendication 2, utilisé dans un protocole sans transfert de connaissance (zero knowledge), selon lequel le message clair est utilisé par le dispositif sécurisé au moins en tant que partie d'un secret utilisé dans le protocole sans transfert de connaissance.

4. Procédé selon la revendication 2, utilisé pour le brouillage du contenu d'une distribution entre un certain nombre d'utilisateurs comprenant le brouillage du contenu en utilisant un code de contrôle, dans lequel le code de contrôle est ledit message clair, et dans lequel le contenu brouillé et le nombre de messages de commande cryptés sont transférés à tous les utilisateurs.

5. Procédé selon la revendication 4, selon lequel un message de retrait est transféré à tous les utilisateurs, ledit message identifiant une pluralité de clés qui sont retirées dudit nombre de clés.

6. Procédé pour désembrouiller un contenu brouillé, comprenant la réception du contenu brouillé et la réception d'une pluralité de messages de commande cryptés, communiqués à un dispositif sécurisé utilisant un procédé selon la revendication 2, chaque message de commande crypté possédant un identifiant et contenant un code de contrôle crypté en utilisant une clé différente identifiée par l'identifiant correspondant, la récupération d'un premier identifiant de clé à partir d'un dispositif sécurisé ayant une pluralité de clés avec des identifiants de clés, la recherche d'un message de commande crypté ayant un identifiant correspondant à l'identifiant récupéré et le décryptage, dans le dispositif sécurisé, du message de commande crypté trouvé pour obtenir le code de contrôle, et le désembrouillage du contenu brouillé en utilisant le code de contrôle.

7. Procédé selon la revendication 6, dans lequel un identifiant de clé suivant est récupéré à partir du dispositif sécurisé si un message de commande crypté avec le premier identifiant de clé récupéré ne peut pas être trouvé.

8. Système de sécurité comprenant une pluralité de terminaux et une pluralité de dispositifs sécurisés, chaque dispositif sécurisé comprenant un processeur et une mémoire pour mémoriser une combinaison de clés parmi un certain nombre de clés uniques (A, a; A, b; ...; E, d; E, e), dans lequel les dispositifs sécurisés sont divisés en ensembles (A, B, C, D, E), chaque ensemble contenant une pluralité de sous-ensembles (a, b, c, d, e), chaque sous-ensemble comprenant au mois deux dispositifs sécurisés ayant la même clé qui est unique pour ce sous-ensemble, dans lequel chaque dispositif sécurisé est un élément d'un nombre d'ensembles (A, B, C, D, E) de sorte que deux ou plus de deux dispositifs sécurisés, qui sont un élément d'un sous-ensemble, ne sont pas un élément du même sous-ensemble dans un autre ensemble, chaque terminal comprenant des moyens pour transférer un message crypté à un dispositif sécurisé communiquant avec le terminal, dans lequel chaque message crypté est obtenu par cryptage d'au moins un message clair en utilisant différentes clés dudit nombre de clés, par addition d'un identifiant à chaque message crypté identifiant la clé utilisée, dans lequel seule une pluralité du nombre de clés disponibles est utilisée pour fournir lesdits messages cryptés, et par décryptage du message crypté dans le dispositif sécurisé pour obtenir le message clair pour une utilisation ultérieure.

9. Système comprenant un certain nombre de dispositifs sécurisés, tels que des cartes à puce intelligentes, chaque dispositif sécurisé comprenant un processeur et une mémoire pour mémoriser une combinaison de clés parmi un certain nombre de clés uniques (A, a; A, b; ...; E, d; E, e), dans lequel les dispositifs sécurisés sont divisés en ensembles (A, B, C, D, E), chaque ensemble contenant une pluralité de sous-ensembles (a, b, c, d, e), chaque sous-ensemble comprenant au mois deux dispositifs sécurisés ayant la même clé qui est unique pour ce sous-ensemble, dans lequel chaque dispositif sécurisé est un élément d'un nombre d'ensembles (A, B, C, D, E) de sorte que deux ou plus de deux dispositifs sécurisés, qui sont un élément d'un sous-ensemble, ne sont pas un élément du même sous-ensemble dans un autre ensemble.
